# EUROPEAN PATENT SPECIFICATION

(11) **EP 2 640 179 B1**
(45) Date of publication and mention of the grant of the patent: **16.03.2016**
(21) Application number: 11799330.3
(22) Date of filing: 18.11.2011
(51) Int. Cl.: A01G 1/04

(54) **METHOD FOR PREPARING CASING MATERIAL**
VERFAHREN ZUR HERSTELLUNG EINES ABDECKUNGSMATERIALS
PROCÉDÉ DE PRÉPARATION D'UN MATÉRIAU DE COUVERTURE

(30) Priority: 19.11.2010 ZA 201008305
(43) Date of publication of application: 25.09.2013
(73) Proprietor: University of Pretoria, 0002 Pretoria (ZA)
(72) Inventor: MEYER, Linda, 0181 Pretoria (ZA); VAN HEERDEN, Ané, 0182 Pretoria (ZA); KORSTEN, Lise, 0054 Pretoria (ZA)
(74) Representative: Bates, Philip Ian
(86) International application number: PCT/IB2011/055183
(87) International publication number: WO 2012/066511

(56) References cited:
- GB-A- 2 450 346
- US-A1- 2007 101 642
- US-A1- 2007 209 273
- US-A1- 2007 209 275

## Description

### INTRODUCTION AND BACKGROUND

This invention relates to a method for preparing casing material for mushroom production and to casing material prepared in accordance with such a method. This invention further relates to a method of cultivating mushrooms using the casing material in accordance with the invention.

It is known to cultivate button mushrooms, in particular *Agaricus bisporus,* with a method including the steps of:
- providing a growth substrate;
- seeding the substrate with mushroom spawn;
- allowing vegetative mushroom growth in the spawned substrate;
- applying a layer of casing material on top of the growth substrate;
- allowing the casing material to absorb water; and
- stimulating mushroom growth to switch from vegetative to reproductive growth, thereby producing mushroom pins on top of the casing material.

The casing material serves as a water absorbent layer, and is normally a mixture of peat and lime or peat alone. The casing material also functions to supply and conserve moisture for the mushrooms and their rhizomorphs (thicker mushroom mycelia which transports dissolved nutrients to the pins).

Most button mushroom growers use peat obtained from sphagnum moss peat bogs as casing material. The excessive use of peat in mushroom cultivation and other applications has given rise to considerable environmental concern regarding the exploitation of peat bogs. This has led to a need for alternatives that are less distinctive to the environment.

It is known to use composted sugarcane bagasse as substrate in the production of other types of mushrooms, such as Shiitake mushrooms. However, composted bagasse is unsuitable for use as casing material for the production of button mushrooms, because it is moderately high in nutrients and residual sugars, whereas a typical casing material should be relatively low in nutrients in order to trigger reproductive growth of the button mushroom, without the growth of opportunistic saprophytes.

Several other alternative materials have been investigated in the past, but none of these materials were found to be particularly suitable for use as casing material and resulted in inadequate mushroom yields in comparison with peat. The relatively high cost of alternative materials is also restrictive.

Sugarcane bagasse pith is a by-product derived from the paper-making process using sugarcane bagasse. The pith consists of sludge from the pith clarifier, and is removed from the stream before the final effluent clarifier, to ensure a chemical- and heavy metal-free raw pith substrate.

US2007/0209275 discloses the use of dewatered small particle tailings material derived from the industrial washing of coal, metal ores, rocks and extracted minerals for partly substituting peat as casing material for the cultivation of mushrooms. However, US2007/0209275 does not disclose the use of composted sugarcane bagasse pith as a substrate to form casing material. Further examples of casing materials and/or their preparation methods can be found in US 2007/0209273, US 2007/0101642 and GB2450346.

### OBJECTS OF THE INVENTION

It is accordingly an object of the present invention to provide a method for preparing casing material for mushroom production and casing material prepared in accordance with such a method with which the aforesaid disadvantages could be overcome or at least minimised or which is a useful alternative to the known casing materials. Another object of the invention is to provide a method of cultivating mushrooms using the casing material in accordance with the invention.

### SUMMARY OF THE INVENTION

According to a first aspect of the invention there is provided a method for preparing casing material for mushroom production including the steps of:
- providing a body of plant parenchyma tissue extracted from a plant source;
- mixing the body with water to provide a starting mixture; and
- allowing the starting mixture to compost to form the casing material.

Further according to the invention the step of providing a body of plant parenchyma tissue includes the further step of extracting pith from the plant source selected from the group consisting of sugarcane bagasse, coir and water hyacinth.

The method may include the further step of adding a decomposition enhancer to the starting mixture.

The decomposition enhancer may be selected from the group consisting of cattle rumen content, gypsum, lime, microorganisms, and combinations thereof.

The method may include the further step of allowing excess nutrients to leach from the casing material.

According to a second aspect of the invention there is provided casing material for mushroom production comprising a body of plant parenchyma tissue extracted from a plant source and prepared according to a method of the first aspect of the invention.

The prepared casing material may have a pH of between 6.5 and 7.8, preferably 7.5.

The prepared casing material may have a water holding capacity in excess of 350 mℓ water/100g dry weight.

According to a third aspect of the invention there is provided a method of producing button mushrooms, in particular *Agaricus bisporus,* including the steps of:
- providing a growth substrate;
- seeding the substrate with mushroom spawn;
- allowing vegetative mushroom growth in the spawned substrate;
- applying a layer of casing material prepared according to a method of the first aspect of the invention on top of the growth substrate;
- allowing the casing material to absorb water; and
- stimulating mushroom growth to switch from vegetative to reproductive growth, thereby producing button mushroom pins on top of the casing material.

### DESCRIPTION OF A PREFERRED EMBODIMENT OF THE INVENTION

A non-limiting example of a preferred embodiment of the invention is described in more detail below.

### High level description of invention

In accordance with a preferred embodiment of the present invention, a method for preparing casing material for button mushroom production includes the steps of:
- providing a body of plant parenchyma tissue or pith extracted from a plant source in the form of sugarcane bagasse;
- mixing the body with water to provide a starting mixture;
- adding a decomposition enhancer to the starting mixture for stimulating microbial activity;
- allowing the starting mixture to compost; and
- allowing excess nutrients to leach from the mixture.

The decomposition enhancer is selected from the group consisting of cattle rumen content, gypsum, lime, microorganisms, and/or combinations thereof.

The casing material is prepared such that it has a pH of between 6.5 and 7.8, preferably 7.5 and a water holding capacity in excess of 350 mℓ water/100g dry weight.

The casing is used in a method of producing button mushrooms (*Agaricus bisporus*) that includes the steps of:
- providing a conventional growth substrate known in the art of mushroom production;
- seeding the substrate with mushroom spawn;
- allowing vegetative mushroom growth in the spawned substrate;
- applying a layer of casing material prepared in accordance with the preferred embodiment of the invention on top of the growth substrate;
- allowing the casing material to absorb water; and
- stimulating mushroom growth to switch from vegetative to reproductive growth, thereby producing button mushroom pins on top of the casing material.

### Detailed description of respective steps in the method according to the invention:

### Preparation of starting material

During preparation of the starting material, a substrate in the form of sugarcane bagasse pith is mixed with fresh cattle rumen content, on day 1 in a ratio of 50 kg of cattle rumen content per 1 ton sugarcane bagasse pith (5%). Water is added to the mixture with overhead sprinklers, until through-flow of water is achieved. The starting mixture is prepared on a sloped concrete slab in rows, which is typically 120 -180 cm high and 300 - 400 cm wide.

In accordance with a further step of the invention, from day 2 onwards, the temperature of the starting material is monitored at between 40 and 50 °C. In addition, the pH of the starting mixture is monitored to ensure that it remains between 6.0 and 7.0.

### Initial composting stage

According to a further step of the invention, the temperature of the starting material increases owing to the composting process, to approximately 45 to 55 °C, typically above 50 °C, to allow proliferation of thermophilic bacteria and fungi. In addition, the pH of the mixture decreases to between 5.0 and 6.0.

### Turning of casing material

In accordance with a further step of the invention, the casing material is aerated by being turned only on day 70 of composting, to allow aeration of the casing material during the final steps of composting and to obtain consistency. In addition, the turning of the composting casing material assists in regulating the temperature of the composting casing material.

### Watering of casing material

According to a further step of the invention, water is added to the casing material periodically once in every 5 to 7 days. Preferably water is typically added on days 2, 7, 12, 17, 22, 27, 32, 37, 42, 47, 52, 57, 62, 67, 72 and 77 of composting, in the absence of rain, with an aim of maintaining the moisture content of the composting casing material at between 55% and 70%, preferably at 65%, throughout the composting period. During the composting stage, care should be taken not to allow the composting casing material to dry out, as it will inhibit microorganism growth and composting.

### Curing phase

The temperature of the casing material is monitored and once a slow decrease in temperature is observed which reaches and stabilises at ambient temperature, the curing phase has been established. The pH of the casing material is monitored to ensure that it remains between pH 7.0 - 7.5 and during the curing phase, a stabilisation of the pH is observed. The ratio of carbon to nitrogen (C:N) of the casing material is maintained at 40 - 50:1. Once the curing phase has been completed, a casing material having a dark brown to black colour is obtained, having a pH of between 7.0 and 7.8, preferably 7.5. The water holding capacity of the casing material is found to be between 350 and 500 mℓ water/100g dry weight, typically between 400 and 470 mℓ water/100g dry weight.

It was surprisingly found that in using a preparation method according to the invention, adequate moisture, oxygen, nitrogen and carbohydrate levels are maintained throughout the composting process for optimum growth of microorganisms, thus providing casing material suitable for button mushroom production.

### Use and application of casing material

In use, a layer of the prepared casing material according to the invention is applied on top of a spawned growth substrate, in which vegetative growth of *Agaricus bisporus* mushrooms has been well established. The casing material is applied as casing layer at 50ℓ per m². The temperature of the casing material is maintained at 24 to 27 °C for at least 5 days and the relative humidity is kept above 80% to minimise drying of the casing material. Subsequently, the temperature of the substrate is lowered by at least 1 °C each day until the mushroom pins are formed. Under these conditions, the mushroom produces a thread-like network of mycelium throughout the casing material.

The mushroom pins appear after at least 18 to 21 days after applying casing material. The carbon dioxide content is lowered to a range of between 32% and 42% by introducing air to allow the pins to develop. Air temperature is maintained at between 15 and 17 °C during cropping cycles.

It was established that the casing material is particularly suitable as an alternative to conventional casing materials, providing a relatively high mushroom yield. It has further been found that the casing material, according to the invention, is more cost efficient than commercially available peat. It has also unexpectedly been found that the casing material according to the invention has a relatively high water holding capacity, thereby ensuring adequate water absorption and release, increasing the availability of water for the mushrooms.

It has further been ascertained that the casing material is capable of inducing pin formation. Furthermore, it was found that the casing material has a relatively lower content of decomposed inorganic matter, thereby making it relatively easier for the mushrooms to extract water from the casing soil.

It was further found that the casing material according to the invention could be produced in a sustained and environmentally friendly manner, adding value to a waste product and without the destruction of peat bogs and wetlands.

It will be appreciated that variations in detail are possible with a method for preparing casing material for mushroom production and casing material prepared in accordance with such a method, according to the invention without departing from the scope of the appended claims.

## Claims

1. A method for preparing casing material for mushroom production including the steps of providing a body of plant parenchyma tissue extracted from a plant source; mixing the body with water to provide a starting mixture; and allowing the starting mixture to compost to form the casing material.

2. A method according to claim 1 wherein step of providing a body of plant parenchyma tissue includes the further step of extracting pith from the plant source selected from the group consisting of sugarcane bagasse, coir and water hyacinth.

3. A method according to claim 2 including the further step of adding a decomposition enhancer to the starting mixture for enhancing microbial activity.

4. A method according to claim 3 wherein the decomposition enhancer is selected from the group consisting of cattle rumen content, gypsum, lime, microorganisms, and combinations thereof.

5. A method according to any one of claims 1 to 4 Including the further step of allowing excess nutrients to leach from the casing material.

6. Casing material for button mushroom production comprising a body of plant parenchyma tissue extracted from a plant source and prepared according to a method of any one of claims 1 to 5.

7. Casing material according to claim 6 having a pH of between 6.8 and 7.8, preferably 7.5.

8. Casing material according to any one of claims 6 to 7 having a water holding capacity In excess of 350 mℓ water/100g dry weight.

9. A method of producing button mushrooms Including the steps of:
- providing a growth substrate;
- seeding the substrate with mushroom spawn;
- allowing vegetative mushroom growth In the spawned substrate;
- applying a layer of casing material prepared in accordance with anyone of claims 1 to 5 on top of the growth substrate;
- allowing the casing material to absorb water; and
- stimulating mushroom growth to switch from vegetative to reproductive growth, thereby producing mushroom pins on top of the casing material.

## Patentansprüche

1. Verfahren zur Herstellung von Abdeckmaterial für die Pilzproduktion, das die folgenden Schritte beinhaltet: Bereitstellen eines aus einer Pflanzenquelle extrahierten Volumens von Pflanzenparenchymgewebe; Mischen des Volumens mit Wasser, um ein Ausgangsgemisch zu bereiten; und Kompostierenlassen des Ausgangsgemischs, um das Abdeckmaterial zu bilden.

2. Verfahren nach Anspruch 1, wobei der Schritt des Bereitstellens eines Volumens von Pflanzenparenchymgewebe den weiteren Schritt des Extrahierens von Mark aus der Pflanzenquelle beinhaltet, ausgewählt aus der Gruppe bestehend aus Zuckerrohrbagasse, Kokosfaser und Wasserhyazinthe.

3. Verfahren nach Anspruch 2, das den weiteren Schritt des Zugebens eines Abbauverstärkers zu dem Ausgangsgemisch zum Verstärken von mikrobieller Aktivität beinhaltet.

4. Verfahren nach Anspruch 3, wobei der Abbauverstärker aus der Gruppe bestehend aus Viehpanseninhalt, Gips, Kalk, Mikroorganismen und Kombinationen davon ausgewählt ist.

5. Verfahren nach einem der Ansprüche 1 bis 4, das den weiteren Schritt des Auslaugenlassens von überschüssigen Nährstoffen aus dem Abdeckmaterial beinhaltet.

6. Abdeckmaterial für die Champignonproduktion, das ein Volumen aus Pflanzenparenchymgewebe umfasst, extrahiert aus einer Pflanzenquelle und hergestellt mit einem Verfahren nach einem der Ansprüche 1 bis 5.

7. Abdeckmaterial nach Anspruch 6 mit einem pH-Wert zwischen 6,8 und 7,8, vorzugsweise von 7,5.

8. Abdeckmaterial nach einem der Ansprüche 6 bis 7 mit einem Wasserhaltevermögen von mehr als 350 ml Wasser/100 g Trockengewicht.

9. Verfahren zur Champignonproduktion, das die folgenden Schritte beinhaltet:
- Bereitstellen eines Wachstumssubstrats;
- Besäen des Substrats mit Pilzmyzel;
- Zulassen von vegetativem Pilzwachstum in dem mit Myzel besäten Substrat;
- Aufbringen einer Abdeckmaterialschicht, hergestellt nach einem der Ansprüche 1 bis 5, auf das Wachstumssubstrat;
- Zulassen, dass das Abdeckmaterial Wasser absorbiert; und
- Stimulieren von Pilzwachstum, um von vegetativem auf reproduktives Wachstum umzustellen, um dadurch Pilzkopfzapfen auf dem Abdeckmaterial zu erzeugen.

## Revendications

1. Procédé de préparation d'un matériau de gobetage pour la production de champignons, comprenant les étapes consistant à fournir un corps de tissu parenchymateux végétal extrait d'une source végétale ; mélanger le corps avec de l'eau pour donner un mélange de départ ; et laisser le mélange de départ se composter pour former le matériau de gobetage.

2. Procédé selon la revendication 1, dans lequel l'étape consistant à fournir un corps de tissu parenchymateux végétal comprend l'étape supplémentaire consistant à extraire de la moelle de la source végétale sélectionnée parmi le groupe consistant en bagasse de canne à sucre, coir et jacinthe d'eau.

3. Procédé selon la revendication 2, comprenant l'étape supplémentaire consistant à ajouter un activateur de décomposition au mélange de départ afin de renforcer l'activité microbienne.

4. Procédé selon la revendication 3, dans lequel l'activateur de décomposition est sélectionné parmi le groupe consistant en contenu de panse de bétail, gypse, chaux, micro-organismes et des combinaisons de ceux-ci.

5. Procédé selon l'une quelconque des revendications 1 à 4, comprenant l'étape supplémentaire consistant à laisser les nutriments excédentaires filtrer du matériau de gobetage.

6. Matériau de gobetage pour la production de champignons comprenant un corps de tissu parenchymateux végétal extrait d'une source végétale et préparé conformément à un procédé selon l'une quelconque des revendications 1 à 5.

7. Matériau de gobetage selon la revendication 6, ayant un pH d'entre 6,8 et 7,8, de préférence de 7,5.

8. Matériau de gobetage selon l'une quelconque des revendications 6 à 7, ayant une capacité de retenue d'eau de plus de 350 ml d'eau/100 g de poids à sec.

9. Procédé de production de champignons boutons comprenant les étapes consistant à :
- fournir un substrat de croissance ;
- ensemencer le substrat avec du blanc de champignons ;
- permettre la croissance végétative des champignons dans le substrat ensemencé de blanc de champignon ;
- appliquer une couche de matériau de gobetage préparé selon l'une quelconque des revendications 1 à 5, au-dessus du substrat de croissance ;
- permettre au substrat de croissance d'absorber l'eau ; et
- stimuler la croissance des champignons pour qu'elle passe d'une croissance végétative à une croissance reproductive, produisant ainsi des petits boutons de champignons au-dessus du matériau de gobetage.
